Europäisches Patentamt

European Patent Office

Office européen des brevets

(11) Publication number: **0 053 475**
**B1**

(12) **EUROPEAN PATENT SPECIFICATION**

(45) Date of publication of patent specification: **01.04.87**

(21) Application number: **81305574.6**

(22) Date of filing: **25.11.81**

(51) Int. Cl.⁴: **G 11 B 17/04, G 11 B 33/02, G 11 B 3/095, G 11 B 19/02**

(54) **Record playing apparatus.**

(30) Priority: **28.11.80 JP 166624/80**
**12.12.80 JP 177548/80 u ·**

(43) Date of publication of application:
**09.06.82 Bulletin 82/23**

(45) Publication of the grant of the patent:
**01.04.87 Bulletin 87/14**

(84) Designated Contracting States:
**AT DE FR GB NL**

(56) References cited:
**DE-B- 15 561**
**DE-C- 747 983**
**DE-U-1 651 926**

**FUNKSCHAU, Vol. 52, No. 16, August 1980, München. "Plattenspieler mit Frontlade- Automatik", pages 81 to 82**
**Patent Abstracts of Japan, Vol. 4, No. 160, 8 November 1980, page 150P35**

(73) Proprietor: **SONY CORPORATION**
**7-35 Kitashinagawa 6-Chome Shinagawa-ku Tokyo 141 (JP)**

(72) Inventor: **Takizawa, Kazuyuki**
**4015-3 Kobayashi Inzai-machi**
**Inba-gun Chiba-ken (JP)**
Inventor: **Izumi, Takao**
**1016-12-573 Okusawa**
**Setagaya-Ku Tokyo (JP)**
Inventor: **Kodama, Makoto**
**158-8 Tanaka-machi Isogo-Ku**
**Yokohama-shi Kanagawa-Ken (JP)**

(74) Representative: **Thomas, Christopher Hugo et al**
**D Young & Co 10 Staple Inn**
**London WC1V 7RD (GB)**

## Description

This invention relates to front loading type record playing apparatus. The invention is particularly concerned with record changing.

Conventional record playing apparatus generally includes a dust cover which is pivotally mounted on the housing of the record playing apparatus. When performing a record changing operation, the dust cover is pivoted to an open position, but it is closed at all other times to prevent dust accumulation on the turntable and other parts of the apparatus. Because of the pivotally mounted arrangement of the dust cover, additional space in the vertical direction is required to pivot the dust cover to its open position during the record changing operation. This arrangement is, of course, undesirable when the apparatus is supported within a small confine. However, if the dust cover is omitted so as to avoid this problem, dust will be deposited on the turntable and other parts of the apparatus. This can result in damage to the apparatus and to record discs, and to deterioration in the quality of reproduced signals.

Japanese patent specification JP—A—55—108 962 discloses a record playing apparatus including a housing from the front of which a turntable can be partly withdrawn for changing a record disc. As the turntable is moved outwards a part of the top of the housing is moved upwards to facilitate changing of the record disc, but like the first-mentioned apparatus this requires additional space in the vertical direction.

A dust-proof record playing apparatus has also been proposed in which a record disc is inserted into the front of a substantially closed housing. The record disc is then automatically loaded and unloaded with respect to a playing position in the apparatus. Since this apparatus does not include a dust cover, it overcomes the aforementioned difficulty. However, it is impossible manually to select a desired piece of music on a record disc by manual operation of the tone arm. It is also extremely difficult to perform any internal maintenance on this apparatus. Moreover, because of the nature of this apparatus, it is extremely difficult to provide an amplifier and the like directly on the apparatus.

"Funkshau" Vol. 52, No. 16, August 1980, pages 81, 82 discloses a front loading type record playing apparatus in which a record carrier moves out forwards and upwards from a housing to ride over a front flap which normally closes the front of the housing and which pivots downwards as the record carrier moves forwards.

According to the present invention there is provided a front loading type record playing apparatus comprising:

a housing having a front opening;

record carrier means for supporting a record disc, said record carrier means being arranged to move between a first carrier position within said housing and a second carrier position withdrawn from said housing;

carrier means for supporting said record carrier means when said record carrier means is moved between said first carrier position and said second carrier position;

drive means for moving said record carrier means between said first carrier position and said second carrier position; and

control means for moving a cover means to a first cover position above the upper surface of said record carrier means and in a blocking relation to said front opening when said record carrier means is moved to said first carrier position, and to a second cover position below said upper surface of said record carrier means and out of said blocking relation with said front opening when said record carrier means is moved to said second carrier position;

a tone arm with a cartridge for playing a record disc; and

at least one manually-operable switch;
characterised by:

said tone arm being mounted on said record carrier means;

said cover means being mounted on a frame which is movably mounted on said record carrier means;

said record carrier means being arranged to move horizontally through said front opening between said first carrier position and said second carrier position;

said record carrier means having a front end in which is a slot within which said cover means is positioned when said cover means is moved to said second cover position; and

said at least one manually-operable switch being mounted on a front surface of said record carrier means.

The invention will now be described by way of example with reference to the accompanying drawings, in which:

Figure 1 is a perspective view of an embodiment of record playing apparatus according to the invention, with a record carrier assembly positioned within the apparatus housing;

Figure 2 is a perspective view of the apparatus of Figure 1, with the record carrier assembly withdrawn from the apparatus housing;

Figure 3 is a partial cross-sectional, partial side elevational view of a portion of the apparatus of Figure 1;

Figure 4 is a partial cross-sectional, partial side elevational view of a portion of the apparatus of Figure 2;

Figure 5 is a top plan view, partially in phantom, of a portion of the apparatus of Figure 1; and

Figure 6 is a partial cross-sectional, partial elevational view of a portion of the apparatus of Figure 2.

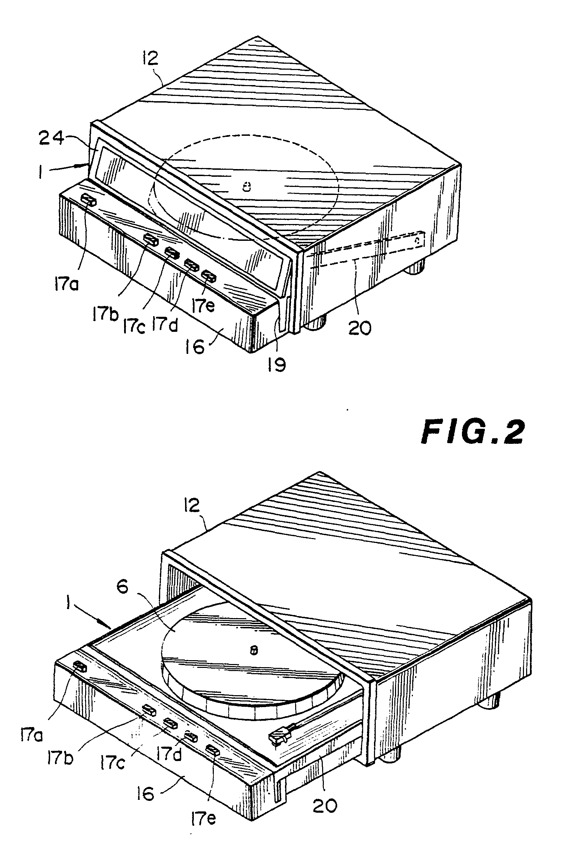

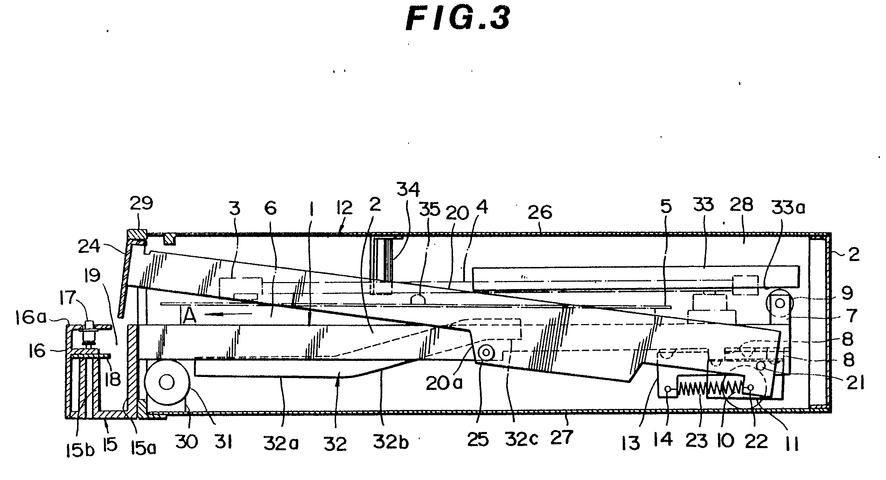

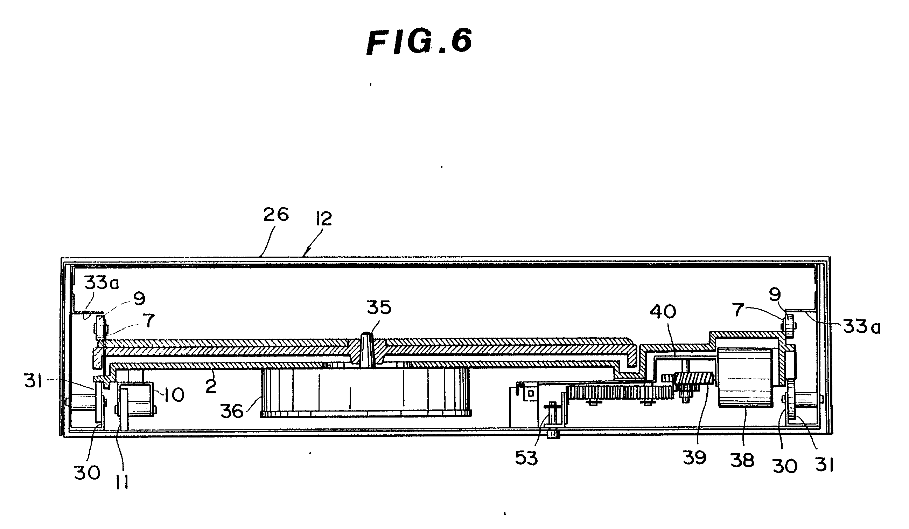

Referring first to Figure 1, the embodiment of record playing apparatus includes a casing or housing 12 formed of a top wall 26, a bottom wall 27 and three side walls 28, with the remaining side of the apparatus at the front being open. A record carrier assembly 1 is disposed within the housing 12 in a first retracted position in Figure 1 and, as shown more particularly in Figures 3, 4 and 6, the record carrier assembly 1 includes a player board 2 on which a rotatable turntable 6 is mounted. As shown in Figure 6, the turntable 6 is centrally mounted on a centre spindle 35, and a turntable motor 36 secured to the underside of the player board 2 and rotates the spindle 35 which, in turn, rotates the turntable 6. A tone arm 4 is also pivotally mounted at one end thereof on the player board 2 and has a record playing cartridge 3 at its free end which reproduces signals recorded on a record disc 5 as it is rotated by the turntable 6.

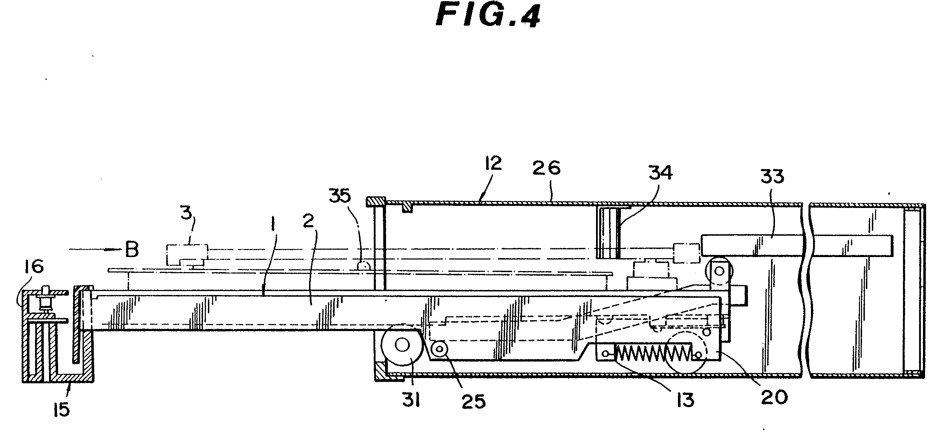

The record carrier assembly 1 is arranged to move between a first retracted position, as shown in Figures 1 and 3, and a second withdrawn position as shown in Figures 2 and 4, in order to perform a record changing operation. In this regard, the rear end of the player board 2 at opposite sides thereof includes downwardly extending projections 8, which, in turn, support brackets 10 on each side of the player board 2, as shown in Figure 3. The brackets 10, in turn, rotatably support guide rollers 11 which rotationally engage the bottom wall 27 of the housing 12. In addition, a pair of brackets 30 are secured to the bottom wall 27 at the front end of the apparatus on opposite sides of the player board 2. Each bracket 30 has a guide roller 31 rotatably mounted thereon for supporting the opposite edges of the player board 2 at the underside thereof. In this manner, the record carrier assembly 1 and the player board 2 thereof are arranged to move in the horizontal direction between the first retracted position shown in Figure 3 and the second withdrawn position shown in Figure 4 as the player board 2 rolls on the guide rollers 11 and 31. Moreover, as shown in Figures 3, 4 and 6, two upright side brackets 7 are secured to the rear end of the player board 2 at opposite sides thereof and, in turn, carry rotatable guide rollers 9. Guide rails 33 are secured to the inner side walls 28 of the housing 12 on opposite sides of the record carrier assembly 1, each having a horizontal lower edge 33a for guiding a respective one of the rollers 9 during the horizontal movement of the record carrier assembly 1 to restrict any vertical displacement of the player board 2 at that time.

A mounting frame 15 is secured to the front end of the player board 2 and, in particular, includes an upright member 15a directly secured to the front of the player board 2, and an upright section 15b connected to the upright member 15a such that a groove or slot 19 is formed between the upright member 15a and the upright section 15b, as shown in Figure 3. A lower panel 16 which may, for example, be an inverted L-shaped metal plate is connected to the front of the mounting frame 15 such that the opening for the slot 19 is defined between an upper member 16a of the lower panel 16 and the upper end of the upright member 15a. A plurality of switches 17a to 17e, which are referred to generically in Figure 3 by the numeral 17, are provided in the upper member 16a for controlling the various operations of the record playing apparatus, and a printed circuit board 18 which carries switch circuits and the like is mounted on the upper end of the upright section 15b in an opposing relation to the switches 17a to 17e. The separation between the printed circuit board 18 and the upright member 15a also functions to define the slot 19. As will be discussed in more detail below, the slot 19 is arranged to co-operate with a dust cover or cover plate 24 such that the latter is positioned within the slot 19 when the record carrier assembly 1 is moved to its second withdrawn position, as shown in Figure 2. Lamps may also be provided on the upper member 16a for determining which of the switches 17a to 17e has been activated.

For controlling the position of the dust cover 24, two elongated arms 20 are provided on opposite sides of the player board 2. More particularly, one end of each arm 20 is pivotally mounted by a pivot pin 21 on a respective one of the brackets 10 at the rear of the player board 2, as shown in Figures 3 and 4. Each arm 20 has a spring anchoring aperture 22 at its pivoted end, and a mounting member 13 secured to the rear end of the player board 2 at opposite sides thereof is formed with respective spring anchoring apertures 14. In this manner, a coil spring 23 is connected between each aperture 14 and its corresponding aperture 22 and functions to bias each respective arm 20 in the clockwise direction, as viewed in Figures 3 and 4 about its respective pivot pin 21. The dust cover 24 which is shown in an inverted L-shaped configuration, is secured to the free ends of the arms 20. Thus, when the arms 20 are biased in the clockwise direction, as viewed in Figure 3, the upper end of the dust cover 24 abuts against a decorative frame member 29 secured to the front or open end of the top wall 26 of the housing 12. Accordingly, the arms 20 are limited in their clockwise angular rotation. It is to be appreciated that, in this position, as shown in Figures 1 and 3, the dust cover 24 blocks the opening to the apparatus at the front end thereof to prevent dust from entering and interfering with the operation thereof. In this position, the lower end of the dust cover 24 is positioned at the upper end or opening of the slot 19 formed between the upper member 16a of the lower panel 16 and the upper end of the upright member 15a. In addition, as will be described in more detail below, a cam follower in the form of a roller 25 is mounted on an outwardly projecting pin approximately midway on each arm 20, adjacent to a stop portion 20a on each arm 20.

As shown in Figure 3, cam bars 32 are secured to side walls 28 of the housing 12 at opposite sides of the player board 2, each cam bar 32 including a horizontal forward portion 32a extending from the front end of the housing 12 and terminating in an upwardly inclined portion 32b which, in turn, terminates in a horizontal portion 32c. The cam bars 32 are arranged to guide the respective rollers 25 of the arms 20. In particular, when the player board 2 is moved from its first retracted position, as shown in Figure 3, to its second withdrawn position, as shown in Figure 4, the arms 20 are moved along therewith. Accordingly, the rollers 25 are guided along the underside of the cam bars 32 so that the arms 20 are biased in the counter-clockwise direction against the action of the springs 23. In this manner, when the player board 2 is moved to its second withdrawn position, as shown in Figure 4, the arms 20 are horizontally arranged and the dust cover 24, which is secured to the free ends of the arms 20, is positioned out of the way in the slot 19. A record disc positioning member 34 also extends downwardly from the inner portion of the top wall 26 for aiding the user in positioning a record disc 5 on the turntable 6 when the record carrier assembly 1 is moved to its second withdrawn position.

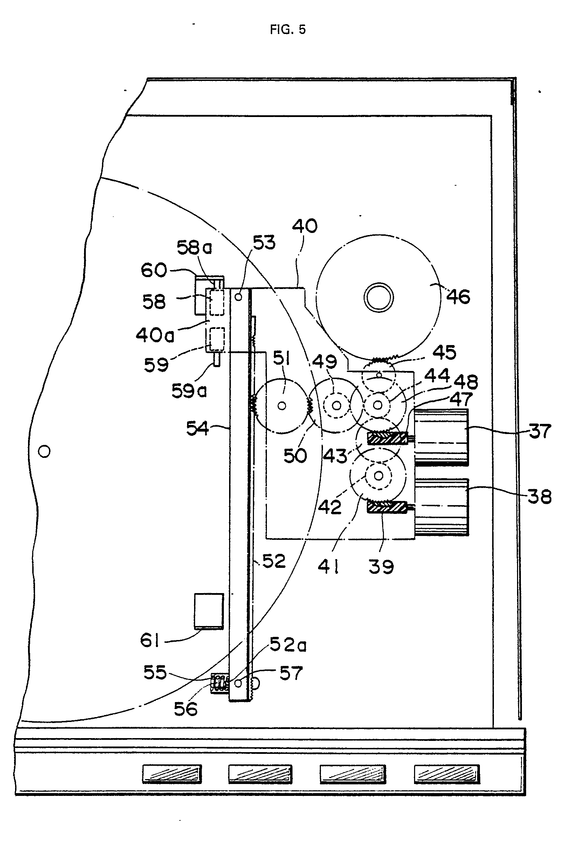

Referring now to Figure 5, there is shown an arrangement for moving the record carrier assembly 1 and the player board 2 between the first retracted position and second withdrawn position with respect to the housing 12. In particular, a motor 37 is provided with a worm gear 47 secured to its output shaft. The worm gear 47 is coupled through a gear train comprising gears 48, 49, 50 and 51 mounted on a gear mounting plate 40, to a guide rack 52. The gear mounting plate 40 is attached to the underside of the player board 2 for movement therewith, and the guide rack 52 is secured to the right edge face of a lever 54 which is pivotally mounted at one end thereof by means of a pivot pin 53 to a rear portion of the bottom wall 27. The lever 54, and therefore, the guide rack 52, are normally biased in the counter-clockwise direction, as viewed in Figure 5, by a spring 56 connected between one end of a spring anchoring aperture 55 formed in the bottom wall 27 and a projection 52a connected to the left edge face of the lever 54. In this manner, the engaging teeth of the guide rack are normally biased into meshing engagement with the gear 51 of the gear train. The free end of the lever 54 also includes an operating pin 57 which extends through the spring anchoring aperture 55 and which is used for manual operation of the apparatus, as will be discussed in greater detail below.

As shown in Figure 5, two switches 58 and 59 having respective extended operating members 58a and 59a, which face in opposite directions, are provded on an extended portion 40a of the mounting plate 40. The operating members 58a and 59a co-operate with actuating members 60 and 61, respectively, which project from the rear and front portions of the bottom wall 27. Thus, when the player board 2 is in its first retracted position, the actuating member 60 engages the operating member 58a of the switch 58 to detect that position, while the actuating member 61 co-operates with the operating member 59a of the switch 59 when the player board 2 is in its second withdrawn position to detect that position.

A motor 38 for operating the tone arm 4 is also provided on the mounting plate 40 in a side-by-side relation to the motor 37 and includes a worm gear 39 secured to its output shaft. The worm gear 39 co-operates with a gear 46 secured to an arm shaft of the tone arm 4, through a gear train comprising gears 41 to 45 mounted on the gear mounting plate 40, to control movement of the tone arm 4.

In operation, prior to the start of the reproducing operation, the record carrier assembly 1 is positioned within the housing 12 in its first retracted position. At this time, the dust cover 24 which is supported at the free ends of the arms 20 is positioned in a blocking relation to the opening of the housing 12 between the decorative frame 29 and the upper end of the slot 19, thereby preventing dust from entering the interior of the housing 12 and interrupting or deteriorating the reproducing operation. To initiate the playback operation, the switch 17a is depressed. This activates the motor 37 to cause rotation of the gear 51 through the worm gear 47 and the gear train comprising the gears 48 to 50. As the gear 51 is rotated, it advances along the guide rack 52, thereby moving the record carrier assembly 1 from its first retracted position to its second withdrawn position. When the operating member 59a of the switch 59 strikes the actuating member 61, the current supply to the motor 37 is interrupted, whereby the record carrier assembly 1 and player board 2 are maintained in the second position withdrawn from the housing 12.

During the advancement of the carrier assembly 1, the elongated arms 20 are also advanced therewith. During such advancement to the withdrawn position, the rollers 25 of the arms 20 are guided by the cam bars 32, whereby the arms 20 are rotated in the counter-clockwise direction, from the position shown in Figure 3 to that shown in Figure 4. When the rollers 25 are guided by the horizontal forward portions 32a of the cam bars 32, the dust cover 24 is positioned within the slot 19. Moreover, the extent of withdrawal of the record carrier assembly 1 is restricted by the stop portion 20a on each arm 20, which abuts against a respective guide roller 31. Also, during the withdrawal operation, the rollers 9 co-operate with the guide rails 33 to prevent any vertical displacement of the player board 2.

When the record carrier assembly 1 is in its second withdrawn position, as shown in Figure 4, the centre spindle 35 of the turntable 6 is positioned in the proximity of the decorative frame 29 while the dust cover 24 is positioned within the slot 19. In other words, no obstacles are present to prevent the removal of a record disc 5 from the turntable 6 or the placement of a record disc 5 on the turntable 6, for example, by moving the record disc 5 in the direction of arrow B of Figure 4 onto the turntable 6.

After a record disc 5 has been positioned on the turntable 6 for reproduction, the switch 17b is depressed, whereby the motor 37 is activated to rotate in the opposite or reverse direction. In this manner, the motor 37, through the worm gear 47, the gear train comprising the gears 48 to 50, the gear 51 and the guide rack 52, causes the record carrier assembly 1 to be moved from its second withdrawn position to its first retracted position into the housing 12, as shown in Figure 3. When the operating member 58a of the switch 58 contacts the actuating member 60, the current supply to the motor 37 is interrupted, whereby the reverse movement of the record carrier assembly 1 is stopped. During such reverse movement of the record carrier assembly 1, the rollers 25 of the arms 20 are guided along the cam bars 32, whereby the arms 20 are caused to rotate in the clockwise direction, as viewed in Figure 3, by means of the springs 23. However, the extent of such clockwise rotation is limited by the abutment of the dust cover 24 at the free ends of the arms 20 against the decorative frame 29.

Thereafter, the switch 17c is depressed for initiating the reproduction operation. In particular, after the switch 17c has been depressed, the turntable motor 36 is activated to rotate the spindle 35 and thereby the turntable 6. The depression of the switch 17c also provides for the activation of the tone arm motor 38. Accordingly, the tone arm motor 38, through the worm gear 39, the gear train comprising the gears 41 to 45 and the gear 46 causes the tone arm 4 to be led from its rest position towards the outermost circumferential groove on the record disc 5. When this lead-in operation has been completed, the meshing relation between the gears 45 and 46 is released, for example, by means of a notch provided in one of the gears, such that the stylus of the cartridge 3 at the free end of the tone arm 4 rides within the spiral groove of the record disc 5 for reproducing recorded signals. A circuit (not shown) is provided for detecting when the playback operation is completed, that is, when the tone arm 4 is positioned within the innermost groove of the record disc 5 and, in turn, activates a mechanism for lifting the tone arm 4 from the record disc 5 and then activates the motor 38 for returning the tone arm 4 to its rest position. After the tone arm 4 has been returned to its rest position, the motor 38 is deactivated to complete the reproducing operation.

The embodiment may also be utilized in a manual operation, for example, where it is desired to select a predetermined piece of music on the record disc 5. In this case, the operating pin 57 is biased to the left in Figure 5 against the biasing force of the spring 56. This can be accomplished by means of any suitable mechanical or electromechanical arrangement. This, in turn, causes the lever 54 to be rotated in the clockwise direction, as viewed in Figure 5, about the pivot pin 53 such that the guide rack 52 is brought out of meshing engagement with the gear 51. In this manner, the record carrier assembly 1 can be manually withdrawn from the housing 12. The reproducing operation can then be performed with the record carrier assembly 1 withdrawn from the housing 12.

It is to be appreciated that the embodiment can be utilized in an extremely small confine, because the space necessary for performing the record changing and reproducing operations is minimized. With such an arrangement, a dust cover is still provided for preventing dust and the like from entering the housing, but the dust cover is automatically removed to a non-obstructing position during record changing. It is possible to provide manual operation, and also an amplifier and other assemblies may be installed directly in the apparatus.

**Claims**

1. A front loading type record playing apparatus comprising:
a housing (12) having a front opening;
record carrier means (1) for supporting a record disc (5), said record carrier means (1) being arranged to move between a first carrier position within said housing (12) and a second carrier position withdrawn from said housing (12);
carrier support means (11) for supporting said record carrier means (1) when said record carrier means (1) is moved between said first carrier position and said second carrier position;
drive means (37) for moving said record carrier means (1) between said first carrier position and said second carrier position;
control means (20, 25, 32) for moving a cover means (24) to a first cover position above the upper surface of said record carrier means (1) and in a blocking relation to said front opening when said record carrier means (1) is moved to said first carrier position, and to a second cover position below said upper surface of said record carrier means (1) and out of said blocking relation with said front opening when said record carrier means (1) is moved to said second carrier position;
a tone arm (4) with a cartridge (3) for playing a record disc (5); and
at least one manually-operable switch (17);
characterised by:
said tone arm (4) being mounted on said record carrier means (1);
said cover means (24) being mounted on a frame (15) which is movably mounted on said record carrier means (1);
said record carrier means (1) being arranged to move horizontally through said front opening between said first carrier position and said second carrier position;
said record carrier means (1) having a front end in which is a slot (19) within which said cover means (24) is positioned when said cover means (24) is moved to said second cover position; and
said at least one manually-operable switch (17) being mounted on a front surface (16) of said record carrier means (1).

2. Apparatus according to claim 1 wherein said control means includes arm means (20) connected to said record carrier means (1) and said cover means (24) and cam means (32) for controlling said arm means (20) to move said cover means (24) to said second cover position when said record carrier means (1) is moved to said second carrier position.

3. Apparatus according to claim 2 wherein said arm means (20) is pivotally connected at one end thereof to said record carrier means (1) and has a second, opposite end to which said cover means (24) is connected.

4. Apparatus according to claim 3 wherein said cam means (32) includes at least one cam bar (32) secured to said housing (12) and having a portion (32b) which is inclined with respect to said record carrier means (1), and said control means further includes cam follower means (25) connected to said arm means (20) and guided by said cam means (32) so that said arm means (20) is controlled to move said cover means (24) to said second cover position when said record carrier means (1) is moved to said second carrier position.

5. Apparatus according to claim 2 wherein said control means (20, 25, 32) further includes biasing means (23) for biasing said arm means (20) to move said cover means (24) to said first cover position.

6. Apparatus according to claim 5 wherein said arm means (20) is pivotally connected at one end thereof to said record carrier means (1) and has a second, opposite end to which said cover means (24) is connected, and said biasing means includes spring means (23) for pivotally biasing said arm means (2) to move said cover means (24) to said first cover position in blocking relation to said front opening.

7. Apparatus according to claim 4 wherein said cam follower means (25) includes at least one guide roller (25) connected to said arm means (20) and which is guided by said at least one cam bar (32) during movement of said record carrier means (1) between said first carrier position and said second carrier position.

8. Apparatus according to claim 1 wherein said carrier support means (11) includes first rollers (11), each mounted on one of said housing (12) and said record carrier means (1) and being in rotatable communication with the other of said housing (12) and said record carrier means (1).

9. Apparatus according to claim 1 further including second rollers (9) mounted on one of said housing (12) and said record carrier means (1) and being in rotatable communication with the other of said housing (12) and said record carrier means (1) for restricting any vertical displacement of said record carrier means (1) during movement thereof between said first carrier position and said second carrier position.

10. Apparatus according to claim 9 further including guide rails (33) secured to said housing (12), and wherein said second rollers (9) are mounted on said record carrier means (1) and are in rotatable contact with said guide rails (33).

11. Apparatus according to claim 1 wherein said drive means includes a rack (52) secured to said housing (12), a motor (37) mounted on said record carrier means (1) and coupling means (47 to 51) for coupling said motor (37) to said rack (52).

12. Apparatus according to claim 11 wherein said rack (52) has a plurality of gear teeth, said motor (37) includes a rotatable drive shaft and said coupling means includes at least one gear (47 to 51) for coupling said drive shaft to the gear teeth of said rack (52).

13. Apparatus according to any one of the preceding claims wherein said record carrier means (1) includes a rotatable turntable (6) for rotatably supporting said record disc (5) during reproduction thereof and a tone arm (4) for reproducing signals from said record disc (5) when said turntable (6) rotates.

**Patentansprüche**

1. Frontlader-Plattenspieler
mit einem Gehäuse (12) mit einer Frontöffnung,
mit einem als Träger für eine Platte (5) dienenden Trägerschlitten (1), der zwischen ersten Schlittenposition, in der er sich in dem Gehäuse (12) befindet, und einer zweiten Schlittenposition bewegbar ist, in der er aus dem Gehäuse (12) herausgezogen ist,
mit einer Schlittenlagerungseinrichtung (11), auf der der Trägerschlitten (1) gelagert ist, wenn er zwischen der ersten und der zweiten Schlittenposition bewegt wird,
mit Antriebsmitteln (37) für die Bewegung des Plattenschlittens (1) zwischen der ersten und der zweiten Schlittenposition,
mit Steuerungsmittel (20, 25, 32), mit deren Hilfe eine Abdeckeinrichtung (32) in eine oberhalb der Oberseite des Trägerschlittens (1) liegende die Frontöffnung blockierende erste Abdeckposition bewegbar ist, wenn der Trägerschlitten (1) in die erste Schlittenposition bewegt wird, und in eine unterhalb der Oberseite des Trägerschlittens liegende zweite Abdeckposition, in der die Blockierung der Frontöffnung aufgehoben ist, wenn der Trägerschlitten (1) in die zweite Schlittenposition bewegt wird,
mit einem Tonarm (4) mit einem Tonabnehmer (3) zum Abspielen einer Platte (5)
und mit wenigstens einem manuell betätigbaren Schalter (17),
dadurch gekennzeichnet,
daß der Tonarm (4) an dem Trägerschlitten (1) montiert ist,
daß die Abdeckeinrichtung (24) an einem Rahmen (15) montiert ist, der an dem Trägerschlitten (1) schwenkbar angeordnet ist,
daß der Trägerschlitten (1) derart angeordnet ist, daß er horizontal durch die Frontöffnung zwischen der ersten Schlittenposition und der zweiten Schlittenposition bewegbar ist,
daß in dem vorderen Endbereich des Trägerschlittens (1) ein Schlitz (19) vorgesehen ist, in welchem die Abdeckeinrichtung (24) aufgenommen wird, wenn sie in die zweite Abdeckposition bewegt wird,
und daß wenigstens ein manuell betätigbarer Schalter (17) an einer Frontfläche (16) des Trägerschlittens (1) montiert ist.

2. Platenspieler nach Anspruch 1, bei dem die Steuerungsmittel eine mit dem Trägerschlitten (1) und der Abdeckeinrichtung (24) verbundene Armeinheit (20) sowie eine Nockeneinrichtung (32) umfassen, durch die die Armeinheit (20) derart steuerbar ist, daß sie die Abdeckeinrichtung (24) in die zweite Abdeckposition führt, wenn der Trägerschlitten (1) in die zweite Schlittenposition bewegt wird.

3. Plattenspieler nach Anspruch 2, bei dem die Armeinheit (20) mit einem Endbereich schwenkbar mit dem Trägerschlitten (1) und mit einem zweiten entgegengesetzten Endbereich mit der Abdeckeinrichtung (24) verdunden ist.

4. Plattenspieler nach Anspruch 3, bei dem die Nockeneinrichtung (32) wenigstens eine an dem Gehäuse (12) befestigte Nockenstange (32) mit einem gegenüber dem Trägerschlitten (1) geneigten Abschnitt (32b) aufweist und die Steuerungsmittel Nockenabtastmittel (25) umfassen, die mit der Armeinheit (20) verbunden sind und von der Nockeneinrichtung (32) derart geführt werden, daß die Armeinheit (20) zur Bewegung der Abdeckeinrichtung (24) in die zweite Abdeckposition veranlaßt wird, wenn der Trägerschlitten (1) in die zweite Schlittenposition bewegt wird.

5. Plattenspieler nach Anspruch 2, bei dem die Steuerungsmittel (20, 25, 32) ferner Vorspannmittel (23) umfassen, durch die die Armeinheit (20) derart vorgespannt wird, daß sie dei Abdeckeinrichtung (24) in die erste Abdeckposition führt.

6. Plattenspieler nach Anspruch 6, bei dem die Armeinheit (20) mit einem Endbereich schwenkbar mit dem Trägerschlitten (1) und mit einem zweiten entgegengesetzten Endbereich mit der Abdeckeinrichtung (24) verbunden ist und bei dem die genannten Vorspannmittel eine Federanordnung (23) für die schwenkbare Vorspannung der Armeinheit (20) umfassen, durch die die Abdeckeinrichtung (24) in die die Frontöffnung blockierende Abdeckposition bewegbar ist.

7. Plattenspieler nach Anspruch 4, bei dem die Nockenabtastmittel (25) wenigstens eine Führungsrolle (25) umfassen, die mit der Armeinheit (20) verbunden ist und während der Bewegung des Trägerschlittens (1) zwischen der ersten und der zweiten Schlittenposition von der Nockenstange (32) geführt wird.

8. Plattenspieler nach Anspruch 1, bei dem die Schlittenlagerungseinrichtung (11) erste Rollen (11) umfaßt, die entweder an dem Gehäuse (12) oder an dem Trägerschlitten (1) montiert sind und mit dem jeweils anderen Teil (1 bzw. 12) in rollender Verbindung stehen.

9. Plattenspieler nach Anspruch 1, bei dem ferner zweite Rollen (9) vorgesehen sind, die entweder an dem Gehäuse (12) oder an dem Trägerschlitten (1) montiert sind und mit dem jeweils anderen Teil (12 bzw. 1) in rollender Verbindung stehen, um alle Vertikalverschiebungen des Trägerschlittens (1) während seiner Bewegung zwischen der ersten und der zweiten Schlittenposition einzuschränken.

10. Plattenspieler nach Anspruch 9, bei dem ferner an dem Gehäuse (12) befestigte Führungsschienen (33) vorgesehen sind und die zweiten Rollen (9) an dem Trägerschlitten (1) montiert sind und in rollendem Kontakt mit diesen Führungsschienen (33) stehen.

11. Plattenspieler nach Anspruch 1, bei dem die Antriebsmittel eine an dem Gehäuse (12) befestigte Zahnstange (52), einen an dem Trägerschlitten (1) montierten Motor (37) sowie Kupplungsmittels (47 bis 51) für die Kupplung des Motors (37) mit der Zahnstange umfassen.

12. Plattenspieler nach Anspruch 11, bei dem die Zahnstange (52) mehrere Zähne aufweist, der motor (37) eine drehbare Antriebswelle besitzt und die Kupplungsmittel wenigstens ein Zahnrad (47 bis 51) zur Kupplung der Antriebswelle mit den Zähnen der Zähnstange (54) umfassen.

13. Plattenspieler nach einem der vorhergehenden Ansprüche, bei dem der Trägerschlitten (1) einen drehbaren Plattenteller (6) für die Lagerung der Platte (5) während des Abspielens sowie einen Tonarm (4) zur Wiedergabe der Signale von der Platte (5) bei laufendem Plattenteller (6) umfaßt.

**Revendications**

1. Tourne-disque du type à chargement par l'avant, comprenant:

un coffret (12) avec une ouverture frontale;

un dispositif porte-disque (1) destiné à supporter un disque (5) et déplaçable entre une première position à l'intérieur du coffret (12) et une deuxième position où il est partiellement extrait du coffret (12);

un dispositif de support (11) pour supporter le porte-disque (1) lorsque celui-ci est déplace entre la première et la deuxième position;

un dispositif d'entraînement (37) pour déplacer le porte-disque (1) entre la première et la deuxième position;

un dispositif de commande (20, 25, 32) pour amener un élément de recouvrement (24) à une première position, où cet élément est situé audesus de la surface supérieure de porte-disque (1) et ferme l'ouverture frontale, lorsque le porte-disque (1) est déplacé à sa première position, et pour amener l'élément de recouvrement à une deuxième position, où cet élément est situé audessous de la surface supérieure du porte-disque (1) et est dégagé de l'ouverture frontale, lorsque le porte-disque (1) est déplace à sa deuxième position;

un bras de lecture (4) avec une cartouche (3) pour la lecture d'un disque (5); et

au moins un interrupteur (17) à commande manuelle;

caractérisé en ce que:

le bras de lecture (4) est monté sur le porte-disque (1);

l'élément de recouvrement (24) est fixé à un cadre (20) monté mobile sur le porte-disque (1);

le porte-disque (1) passe horizontalement à travers l'ouverture frontale pendant le déplacement entre sa première et sa deuxième position;

le porte-disque (1) possède une extrémité frontale pourvue d'une fente (19) dans laquelle est situé l'élément de recouvrement (24) quand cet élément occupe sa deuxième position; et

l'interrupteur (17) à commande manuelle est monté sur une surface frontale (16) du porte-disque (1).

2. Tourne-disque selon la revendication 1, dans lequel le dispositif de commande comporte un bras (20), relié au porte-disque (1) et à l'élément de recouvrement (24), et une came (32) pour commander le bras (20) en vue de l'amenée de l'élément de recouvrement (24) à sa deuxième position lorsque le porte-disque (1) est déplacé à sa deuxième position.

3. Tourne-disque selon la revendication 2, dans lequel le bras (20) est monté oscillant par une extrémité sur le porte-disque (1) et possède une deuxième extrémité ou extrémité opposée à laquelle est relié l'élément de recouvrement (24).

4. Tourne-disque selon la revendication 3, dans lequel la came (32) est constituée par au moins une tige (32) fixée au coffret (12) et possédant une partie (32b) qui est inclinée par rapport au porte-disque (1), le dispositif de commande comportant, en outre, un élément suiveur de came (25) qui est attaché au bras (20) et est guidé par la came (32), de manière que le bras (20) soit commandé pour amener l'élément de recouvrement (24) à sa deuxième position lorsque le porte-disque est déplacé à sa deuxième position.

5. Tourne-disque selon la revendication 2, dans lequel le dispositif de commande (20, 25, 32) comporte, en outre, un dispositif de rappel (23) pour solliciter le bras (20) dans le sens de l'amenée de l'élément de recouvrement (24) à sa première position.

6. Tourne-disque selon la revendication 5, dans lequel le bras (20) est monté oscillant par une extrémité sur le porte-disque (1) et possède une deuxième extrémité ou extrémité opposée, à laquelle est relié l'élément de recouvrement (24), le dispositif de rappel comportant un ressort (23) pour solliciter le bras (20) afin de le faire pivoter dans le sens de l'amenée de l'élément de recouvrement (24) à sa première position, où cet élément ferme l'ouverture frontale.

7. Tourne-disque selon la revendication 4, dans lequel l'élément suiveur de came (25) est constitué par au moins un galet de guidage (25) qui est relié au bras (20) et est guidé par la tige (32) formant came pendant le mouvement du porte-disque (1) entre sa première et sa deuxième position.

8. Tourne-disque selon la revendication 1, dans lequel le dispositif de support (11) du porte-disque comporte un premier jeu de galets (11) qui sont montés chacun sur le coffret (12) ou sur le porte-disque (1), de manière à pouvoir rouler sur l'autre de ces deux composants de l'appareil.

9. Tourne-disque selon la revendication 1, comprenant, en outre, un deuxième jeu de galets (9) montés sur le coffret (12) ou sur le porte-disque (1), de manière à pouvoir rouler sur l'autre de ces deux composants (1, 12) de l'appareil, afin d'empêcher tout déplacement vertical du porte-disque (1) pendant son mouvement entre la première et la deuxième position.

10. Tourne-disque selon la revendication 9, comprenant, en outre, des rails de guidage (33) fixés au coffret (12), et dans lequel les galets (9) du deuxième jeu sont montés sur le porte-disque (1) et sont en contact de roulement avec les rails (33).

11. Appareil selon la revendication 1, dans lequel le dispositif d'entraînement comporte une crémaillère (52) fixée au coffret (12), un moteur (37) monté sur le porte-disque (1), et des moyens d'accouplement (47 à 57) pour accoupler le moteur (37) à la crémaillère (52).

12. Tourne-disque selon la revendication 11, dans lequel la crémaillère (52) possède une denture, le moteur (37) comprend un arbre rotatif d'entraînement et les moyens d'accouplement comprenant au moins une roue dentée (47 à 51) pour accoupler l'arbre d'entraînement et la denture de la crémaillère (52).

13. Tourne-disque selon l'une quelconque des revendications précédentes, dans lequel porte-disque (1) comprend un plateau tournant (6) pour supporter en rotation le disque (5) pendant la reproduction de celui-ci, de même qu'un bras de lecture (4) pour la reproduction de signaux du disque (5) pendant le rotation du plateau (6).

0 053 475

FIG.2

1

**FIG.3**

0 053 475

# FIG.4

0 053 475

FIG. 5

# FIG.6

0 053 475